# EUROPÄISCHE PATENTANMELDUNG

(11) **EP 3 943 219 A1**
(43) Veröffentlichungstag der Anmeldung: **26.01.2022**
(21) Anmeldenummer: 21000200.2
(22) Anmeldetag: 23.07.2021
(51) Int. Cl.: B22F 10/20, B22F 10/28, B22F 10/73, B22F 12/00, B29C 64/153, B33Y 10/00, B33Y 30/00, B33Y 40/00

(54) **VORRICHTUNG UND VERFAHREN ZUM VERBESSERTEN PULVERAUFTRAG IN EINEM ADDITIVEN HERSTELLUNGSVERFAHREN**

(30) Priorität: 24.07.2020 DE 102020004503; 24.07.2020 DE 102020004504
(71) Anmelder: Aixway3D GmbH, 52074 Aachen (DE)
(72) Erfinder: Shen, Liyaowei, 52078 Aachen (DE)

(57) **Zusammenfassung**

Die Erfindung betrifft eine Anlage (10) zum additiven Herstellen von mehrdimensionalen Strukturen (11) mit einer Auftragseinheit (20), eine solche Auftragseinheit (20) und ein Verfahren (100) zum Auftragen von Pulver zur additiven Herstellung von mehrdimensionalen Strukturen unter Verwendung einer solchen Anlage (10) umfassend eine räumlich bewegliche Auftragseinheit (20) für Pulver (30) und eine Anregungseinheit (40), wobei die Auftragseinheit (20) dazu vorgesehen ist, eine oder mehrere Pulverschichten (31) in einer Auftragungsebene (15) auf eine Substratplattform (16) oder auf einer bereits mit der Anlage behandelten Pulverschicht (32) aufzutragen, wobei die Anregungseinheit (40) dazu vorgesehen ist, beim Auftragen des Pulvers (30) Anhaftungen einzelner Pulverkörner (33) zueinander und/oder zu einer bereits mit der Anlage behandelten Pulverschicht (32) aufzubrechen, sodass die Auftragseinheit (20) eine glatte Pulverschicht (31, 32) auf die Substratplattform und/oder auf die vorherige Pulverschicht (32) auftragen kann.

## Beschreibung

Die Erfindung betrifft eine Anlage zum additiven Herstellen von mehrdimensionalen Strukturen mit einer Auftragseinheit, eine solche Auftragseinheit und ein Verfahren zum Auftragen von Pulver zur additiven Herstellung von mehrdimensionalen Strukturen unter Verwendung einer solchen Anlage.

### Stand der Technik

Im Stand der Technik sind additive Herstellungsprozesse bekannt, wie z.B. das 3D Drucken, die ein Ausgangswerkstoff in Pulverform verwenden um eine mehrdimensionale Struktur zu bauen. Der zu verarbeitende Werkstoff kann z.B. durch ein Strahlschmelzverfahren bearbeitet werden um die erwünschte räumliche Struktur zu erhalten. Bekannte Strahlschmelzverfahren sind z.B. Laser Pulver Bed Fusion (LPBF), Elektronenstrahlschmelzen oder selektives Laserintern. Bei einem LPBF Prozess wird der zu verarbeitende Werkstoff in Pulverform durch eine Pulverauftragseinheit in einer dünnen Schicht auf einer Substratplattform aufgebracht. Der aufgebrachte pulverförmige Werkstoff wird mittels Laserstrahlung lokal vollständig umgeschmolzen und bildet nach der Erstarrung eine feste Materialschicht. Anschließend wird die Substratplattform um den Betrag einer Schichtdicke (typischerweise 20 - 100 µm) abgesenkt und es wird erneut Pulver von der Pulverauftragseinheit aufgetragen und durch den Laser gesintert. Dieser Zyklus wird solange wiederholt, bis alle Schichten umgeschmolzen sind und das Bauteil fertig hergestellt ist.

Ein bekanntes Problem bei der Verarbeitung von pulverförmigen Materialien ist jedoch, dass je nach Herstellung bzw. Siebung und Pulverkorngröße, das Pulver verschiedene Eigenschaften aufweisen kann. Zwischen den einzelnen Pulverkörnern sind interpartikulären Haftkräfte, insbesondere Van-der-Waals-Kräfte, die ihre Gewichtskräfte um mehrere Größenordnungen übersteigen können. Beim Auftragen des Pulvers entstehen zudem Scherkräfte, die die Oberfläche des aufgetragenen Pulvers auf der Substratplattform unregelmäßig macht, sodass ein glatter Pulverauftrag erschwert wird. Darunter leidet schließlich auch die Qualität des herzustellenden Bauteils.

Um die Oberfläche des Pulvers zu glätten, stellt z.B. die Firma 3DMikroPrint Techniken bereit, wo nach dem Aufbringen von Pulver auf der Substratplatte nochmals ein Anpressdruck auf die Substratplatte ausgeübt wird. Die Firma 3D-Systems hingingen verwendet eine Walze als Pulverauftragseinheit.

Nachteilig an diesen Ausführungen ist, dass sie nur für große Pulverkörner mit hauptsächlich sphärischer Form geeignet sind. Sowohl bei kleinen Kornfraktionen (z.B. kleiner 20 µm), als auch bei Pulver mit spratziger Form, welches durch die Herstellung und Siebprozesse des Pulvers bedingt ist, kann durch die Agglomerationseigenschaften des Pulvers z. B. die Walze ein bereits glatt aufgetragenes Pulverbett wieder zerstören. Bei einer Verwendung von Anpressdruck ist ein robuster und stabiler Pulverauftrag für kleine Kornfraktionen ebenfalls nicht gegeben, da z.B. beim Aufbau von filigranen Strukturen der Anpressdruck bereits gefertigte Bauteilverformungen wieder zerstören kann.

Es wäre daher wünschenswert, wenn ein glattes Pulverauftragen in einer additiven Herstellung möglich wäre, wobei mitunter zumindest auch die physikalischen Eigenschaften des Pulvers, wie z. B. Größe und Form berücksichtigt werden.

### Zusammenfassung der Erfindung

Eine objektive Aufgabe der Erfindung lautet daher, eine Vorrichtung bereitzustellen, mit der ein glattes Pulverauftragen in einer additiven Herstellung ermöglicht wird, wobei zumindest die physikalischen Eigenschaften des Pulvers, wie z. B. Größe und Form berücksichtigt werden.

Diese Aufgabe wird gelöst durch eine Anlage zum additiven Herstellen von mehrdimensionalen Strukturen umfassend eine räumlich bewegliche Auftragseinheit für Pulver und eine Anregungseinheit. Die Auftragseinheit ist dazu vorgesehen eine oder mehrere Pulverschichten in einer Auftragungsebene auf eine Substratplattform oder auf einer bereits mit der Anlage behandelten Pulverschicht aufzutragen. Die Anregungseinheit ist dazu vorgesehen beim Auftragen des Pulvers Anhaftungen einzelner Pulverkörner zueinander und/oder zu einer bereits mit der Anlage behandelten Pulverschicht aufzubrechen, sodass die Auftragseinheit eine glatte Pulverschicht auf die Substratplattform und/oder auf die vorherige Pulverschicht auftragen kann. Die schlechte Fließfähigkeit des Pulvers wird damit überwunden, indem die Kräfte zwischen den Pulverkörner miteinander zeitweise durch die Anregung aufgebrochen werden. Somit kann das Pulver zum Fließen angeregt werden. Ein stabiles und robustes Laserschmelzverfahren mit auch kleinen Pulverkörnern und/oder mit spratziger Form, die zur Agglomeration neigen, kann dadurch ermöglicht werden. Auch ist dann die Scherkraft Richtung der bereits aufgetragenen Pulverschicht relativ gering, so dass ein Aufblättern (Zerstörung) der vorherigen Pulverschicht vermieden werden kann.

Unter "Anlage zur additiven Herstellung" versteht man eine Fertigungsanlage in der Material Schicht für Schicht aufgetragen und so mehrdimensionale Strukturen erzeugt werden (3D-Druck). Dabei erfolgt der schichtweise Aufbau computergesteuert aus einem oder mehreren flüssigen oder festen Werkstoffen nach vorgegebenen Maßen und Formen. Beim Aufbau finden physikalische oder chemische Härtungs- oder Schmelzprozesse statt. Typische verwendete Materialien für das 3D-Drucken sind Kunststoffe, Kunstharze, Keramiken und Metalle. Auch können auch Carbon- und Graphitmaterialien für den 3D-Druck verwendet werden. Für die Herstellung von Strukturen aus Metall, die vorwiegend im industriellen Bereich angewandt werden, sind besonders Strahlschmelzanlagen geeignet. Unter Strahlschmelzen versteht man z.B. das Laser Powder Bed Fusion (auch selektives Laserschmelzen genannt), das Elektronenstrahlschmelzen und das selektive Lasersintern.

Eine solche Anlage kann eine Steuereinheit zum Steuern des additiven Herstellprozesses umfassen. Eine solche Steuereinheit kann dabei eine Computereinheit, einen Prozessor, eine Speichereinheit etc. umfassen. Die Steuereinheit ist dazu ausgebildet, die Komponenten der Anlage gemäß eines Steuerprogramms anzusteuern, wozu sie mit diesen auf geeignete Weise verbunden ist, beispielsweise mit geeigneten Datenleitung oder drahtlos z.B. über WLAN.

Eine "mehrdimensionale Struktur", worunter vorwiegend dreidimensionale Strukturen zu verstehen sind, können als Bauteile für jegliche Anwendung vorgesehen sein. Zum Beispiel können die Anwendungen für Kunststoffspritzwerkzeuge, Bauteile für die Luft - und Raumfahrttechnik, Spezialwerkzeuge etc. geeignet sein. Der Begriff "mehrdimensionale Struktur" umfasst neben dem fertigen Bauteil auch das unfertige Bauteil, also die Verformung im Pulverbett, während der Fertigung.

Eine "Auftragseinheit" ist eine Vorrichtung, die geeignet ist, um Pulver für das Bauen auf eine Substratplattform aufzutragen. Die Auftragseinheit ist räumlich beweglich relativ zur Anlage ausgestaltet, um Pulver von einem Ort auf den anderen zu transportieren und aufzutragen. Verschiedene Ausführungen der Auftragseinheit sind in den weiteren Absätzen ausgeführt.

Unter "Pulver" versteht man den zu verarbeitenden Werkstoff, welcher in Pulverform verwendet wird. Das Pulver kann z.B. hauptsächlich aus Metall oder Polymeren bestehen. Das Pulver wird bei der Herstellung Schicht für Schicht auf eine Substratplattform aufgetragen. Pro einmal Auftragen durch die Auftragseinheit wird eine "Pulverschicht" auf entweder der Substratplattform (erste Schicht) oder auf eine bereits mit der Anlage behandelten Pulverschicht aufgetragen. Die aufgetragene Pulverschicht weist typischerweise eine Schichtdicke von z. B. 10 µm oder bevorzugt < 20 µm auf. Unter "Pulverschicht" kann man daher auch die Zusammensetzung aller Schichten Pulver, die bereits von der Anlage behandelt wurde, verstehen. Theoretisch können auch "mehrere Pulverschichten" aufgetragen werden, bevor diese von der Anlage behandelt werden (z.B. durch Lasern). Das Pulver kann hauptsächlich aus Pulverkörner desselben Materials bestehen. Eine Materialmischung ist jedoch auch möglich. Die Pulverkörner können sich jedoch in ihrer Größe, Form und ihrer Kornfraktion innerhalb des aufzutragenden/verwendeten Pulvers unterscheiden. Diese Inhomogenität des Pulvers ist meistens durch die Herstellung und/oder durch das Nachbehandeln (z.B. durch Sieben, Windsichten etc.) des Pulvers bedingt. Besonders kleine und/oder spratzige Pulverkörner neigen zur Agglomeration miteinander.

Unter "Substratplattform" versteht man eine Bauplattform für das Tragen der herzustellenden Struktur. Die Substratplattform ist so ausgestaltet, dass sie relativ zur Anlage beweglich ist. Dies ermöglicht ein weiteres Auftragen einer Pulverschicht in eine Auftragsebene, wenn die bereits behandelte Pulverschicht dafür z.B. nach unten bewegt (gesenkt) wird. Die Substratplattform ist meistens so ausgestaltet, dass sie sich mit einer Dichtung innerhalb einer umschlossenen Einheit bewegt. Diese umschließende Einheit kann ein Behälter sein, wobei der Behälter z.B. in Zylinderform ausgeführt sein kann. Der Behälter kann analog zu einem erfindungsgemäßen Pulvervorrat ausgestaltet sein, wobei zudem die Substratplattform analog zu einer erfindungsgemäßen fahrbaren Pulverfördereinheit ausgestaltet sein. Die Substratplattform kann jedoch theoretisch auch frei im Raum angeordnet sein.

Durch eine "Anregung" kann die Anhaftung einzelner Pulverkörner zueinander aufgebrochen werden, um der Agglomeration entgegen zu steuern. Die Anregung wird, vorzugsweise zeitweise, beim Auftragen des Pulvers eingesetzt, um die Anhaftung einzelner Pulverkörner zueinander und/oder zu einer bereits mit der Anlage behandelten Schicht aus vormals Pulverkörner aufzubrechen. Die Anregung kann ferner auch nur für das Glätten einer Pulverschicht verwendet werden, ohne dass ein Auftragen stattfindet. Eine Anregung muss sich nicht zwangsläufig auf Vibrationen beschränken, sie kann auch durch z.B. eine Änderung einer Temperatur ausgeführt werden.

Hiermit wird durch die erfindungsgemäße Anlage ein glattes Pulverauftragen in einer additiven Herstellung bereitgestellt, welches zumindest die physikalischen Eigenschaften des Pulvers, wie z. B. Größe und Form berücksichtigt.

In einer Ausführungsform kann die Anregungseinheit eine Vibrationseinheit umfassen, die mittels Schwingung die Anhaftungen aufbricht. Durch die Schwingungen (auch "Vibrationen" möglich) können die Bindungen zwischen den Pulverkörner besonders effizient gebrochen werden. Die Schwingungen können pneumatisch und/oder elektromagnetisch und/oder durch Ultraschall erzeugt werden. Die pneumatische Anregung kann mit Hilfe eines Gases, z.B. Argon bei der Auftragung erfolgen. Eine Vibrationseinheit mit pneumatischer Anregung ist von Vorteil, da diese klein und kompakt, ohne großen technischen Aufwand und ohne viele zusätzliche Komponenten z.B. in eine Auftragseinheit zu integrieren ist. Nachteilig ist an der pneumatischen Anregung, dass die Auftragsgeschwindigkeit relativ gering ist (bei ca. 20 mm/s) und die Qualität des Glättens im Gegensatz zum Ultraschall schlechter ausfällt. Eine Frequenz der pneumatischen Anregung kann bei ca. 200 Hz liegen. Bei einer elektromagnetischen Anregung hat man den Vorteil, kein Gas zu benötigen. Auch ist die elektromagnetische Anregung technisch einfach zu realisieren. Sie hat jedoch den Nachteil, dass sie nicht für alle Metalle geeignet ist, wie z.B. nicht für Metalle mit ferromagnetischer Eigenschaft. Eine Anregung mit Ultraschall hat deutliche Vorteile bei der Auftragsgeschwindigkeit. Diese kann mehr als 200 mm/s betragen, also mehr als das Zehnfache einer herkömmlichen Auftragsgeschwindigkeit einer Auftragseinheit ohne Anregung. Die Frequenzen des Ultraschalls kann z.B. 35 kHz betragen, welches für Pulverkörner der Größe 2 µm (mittlerer Durchmesser) geeignet ist. Neben dem guten Durchsatz hat Ultraschall auch den Vorteil, dass die Qualität der Glättung besonders gut ist. Demnach kann die Vibrationseinheit dazu geeignet sein, einzelne solcher Schwingungen und/oder eine Kombination solcher Schwingungen zu erzeugen. Die Anregung erfolgt aus einer Richtung oberhalb der Substratplattform (also oberhalb der Pulverschicht), damit mindestens die oberste Pulverschicht der bereits behandelten Pulverschicht angeregt wird. Die Anregung besitzt ferner mindestens eine Frequenz. In einer Ausführungsform überlappt die Frequenz der Anregung nicht mit einer Resonanzfrequenz der Anlage. Dies verhindert ein Beschädigen der Anlage durch die erzeugte Schwingung. In einer weiteren Ausführungsform kann die Frequenz der Schwingung eine Wellenlänge besitzen, die mit einer Korngröße des Pulvers korreliert und/oder einer Auftragsgeschwindigkeit der Auftragseinheit entlang einer Auftragsrichtung korreliert. Die Amplitude der Schwingungen korreliert dabei mit der Frequenz und somit auch der Auftragsgeschwindigkeit der Auftragseinheit, sodass die Größe der einzelnen Körner mit der schwingenden Amplitude in der Größenordnung übereinstimmt. Dies hat den Vorteil, dass die Geschwindigkeit beim Auftragen ohne Verlust an Qualität gesteigert werden kann. Daher kann durch diese Ausführungsform die Effizienz und Durchsatz bei der Herstellung erhöht werden. In einer spezifischen Ausführungsform kann die Frequenz der Anregung zwischen 40 Hz bis 100 kHz betragen. Das hat den Vorteil, dass Korngrößen von unter 20 µm besonders effizient aufgetragen werden können.

In einer Ausführungsform umfasst die Auftragseinheit zusätzlich ein Glättewerkzeug. Das Glättewerkzeug wird für das physikalische Glätten der aufgetragenen und/oder der bereits mit der Anlage behandelten Pulverschicht verwendet. Das Glättewerkzeug kann eine Schleifeinheit, eine Silikon-Lippe, ein Kunststoffbalken, eine Bürste oder eine Metallkante umfassen. Die Silikon-Lippe ist besonders gut geeignet für geringe Frequenzen bei der Anregung, da sie sehr weich ist. Der Kunststoffbalken weist ähnliche Vorteile auf. Eine Bürste ist dagegen gut geeignet für unruhige Prozesse. Eine Metallkante ist gut geeignet, wenn die Prozesse schon stabil eingefahren sind. In einer vorteilhaften Ausführungsform weist die Schleifeinheit ein Material mit einem gewissen Härtegrad auf, welches geeignet für Ultraschallschleifen und/oder Polieren ist. Dabei kann bevorzugter Weise die Schleifeinheit ein herkömmlicher Schleifstein sein. Die Eigenschaft der besonderen Härte beim Schleifeinheit ist besonders bei einer Anwendung in hohen Frequenzbereichen geeignet, wie z.B. bei Ultraschall, da sie besonders stabil ist. Zudem ist ein herkömmlicher Schleifstein, der für ein physikalisches Schleifen vorgesehen ist, kostengünstig zu erlangen. Die Schleifeinheit kann aus Keramik sein. Weiterhin kann die Schleifeinheit aus Aluminiumoxid oder Diamant sein.

In einer Ausführungsform kann die Anregungseinheit der erfindungsgemäßen Anlage ortsfest relativ zu der Pulverschicht und/oder zu der Substratplattform angeordnet sein. Dies kann strukturelle Vorteile mit sich bringen, wie z.B. wenn die Anregungseinheit mit der Substratplattform verbunden oder in dieser integriert ist. Dies kann realisiert sein durch eine vibrierende Substratplattform. Diese Ausführungsform hat jedoch den Nachteil, dass die Wirkung der Vibration nachlässt, je mehr das zu fertigende Bauteil in die Höhe wächst. Denn die Pulverschichten würden im Fall einer vibrierenden Substratplattform zur Dämpfung der Anregung beitragen. Auch ist die technische Realisierung in dem Sinne schwierig, als dass das Pulver an den Seiten des Substratplattforms durch die Vibrationen runterrieseln kann. Daher kann in einer alternativen Ausführungsform die Anregungseinheit räumlich beweglich relativ zu der Pulverschicht und/oder zu der Substratplattform angeordnet sein. Diese Ausführungsform hat den Vorteil, dass die Stärke der Anregung auf die Pulverschichten nicht durch die Bauhöhe der mehrdimensionalen Struktur beeinflusst wird. Auch ermöglicht diese Ausführungsform, dass z.B. die Auftragseinheit die Anregungseinheit umfassen kann. Dadurch ist auch eine kompakte Bauform möglich.

In einer Ausführungsform kann die erfindungsgemäße Anlage eine Dämpfungseinheit sein, die dazu ausgestaltet ist, eine Übertragung der Anregung auf Anlagenkomponenten außerhalb der Anregungseinheit zu reduzieren, umfassen. Die Dämpfungseinheit hat den Vorteil, besonders die Schwingungen der Anregungseinheit in unvorteilhafte Richtungen der Anlage abzudämpfen und die Anlage damit zu schützen. Besonders die Achsen der Anlage sind empfindlich gegenüber Schwingungen, die durch die Vibrationseinheit erzeugt werden. Falls die Anregungseinheit in der Auftragseinheit integriert ausgeführt ist, gilt es vor allem in den Richtungen oberhalb der Pulverschicht zur Bewegungsachse der Anlage zu dämpfen. Dabei kann die Auftragseinheit über einen Halter an Führungen zur Ausführung einer definierten Bewegung der Auftragseinheit gehalten sein, wobei der Halter im Falle der Anregungseinheit angeordnet in der Auftragseinheit als Dämpfungseinheit oder als Teil davon ausgeführt ist. Der Halter kann aus einem weichen Material hergestellt sein, welches Schwingungen gut absorbiert. Der Halter kann daher zusätzlich zum Stabilisieren und Halten der Auftragseinheit auch die Funktion besitzen, zur Dämpfung beizutragen. Für den Schutz und die Langlebigkeit der Anlage ist daher die Dämpfungseinheit vom Vorteil.

Das Glätten der Pulverschicht wird auch erschwert durch die inhomogene Zusammensetzung des Pulvers. In einer Ausführungsform ist die erfindungsgemäße Anlage auch dazu geeignet, Pulverschichten zu glätten, wenn mindestens ein Teil des verwendeten Pulvers eine Eigenschaft zur Agglomeration und/oder eine spratzige Struktur aufweist. Besonders neigen kleine Pulverkörner mit einer Korngröße < 20 µm zur Agglomeration. Daher ist die erfindungsgemäße Anlage besonders geeignet für Pulver, die eine Korngröße von < 20 µm aufweisen, wovon vorzugsweise mindestens ein Teil des verwendeten Pulvers eine Korngröße von < 2 µm aufweist. Eine spratzige Struktur besitzen Pulverkörner, die nicht sphärisch ausgebildet sind und/oder Ecken und Spitzen aufweisen ("spratzige Pulverkörner"). Auch spratzige Pulverkörner können zur Agglomeration neigen, ohne, dass die Korngröße besonders klein ist. Die Korngröße von Pulverkörnern kann beispielsweise nach EN ISO 14688 bestimmt werden.

In einer Ausführungsform kann die erfindungsgemäße Anlage ein Pulversystem, welches Pulver aus mindestens einem ersten Pulvervorrat zur Auftragen einer Pulverschicht durch die Auftragungseinheit bereitstellt, umfassen. Der mindestens erste Pulvervorrat kann eine fahrbare Pulverfördereinheit aufweisen, die eine Menge an Pulver in die Auftragungsebene befördert, damit dieses nachfolgend von der Auftragseinheit in einer oder mehreren Pulverschichten auf die Substratplattform oder auf einer bereits mit der Anlage behandelten Pulverschicht aufträgt. In einer weiteren Ausführungsform kann die Auftragseinheit dazu vorgesehen sein, beim Auftragen des Pulvers überschüssiges Pulver über die Substratplattform hinaus in einem Überlaufbehälter zu schieben. Außerdem kann der Überlaufbehälter als ein zweiter Pulvervorrat ausgestaltet analog zum ersten Pulvervorrat dargestellt sein. Die Auftragseinheit ist dabei dazu vorgesehen, mit jeweils geeigneten Auftragsrichtungen die Menge an Pulver alternierend vom ersten bzw. zweiten Pulvervorrat aufzutragen, wobei auch der erste Pulvervorrat als Überlaufbehälter verwendet wird. Dies hat den Vorteil, dass das überschüssige Pulver, welches sonst einfach entsorgt wird, wieder für die Auftragung verwendet werden kann und somit die Pulvernutzungseffizienz verbessert wird. Für eine besonders optimale Nutzung für die Verbesserung der Pulvernutzungseffizient kann die Menge an befördertem Pulver oberhalb der Auftragungsebene des Pulvervorrats eine Schichtdicke von einem Faktor größer gleich 1.2, bevorzugt einem Faktor 2, besonders bevorzugt einem Faktor 3 oder 4, einer Schichtdicke einer aufgetragenen und/oder aufzutragenden Pulverschicht auf der Substratplattform entsprechen. Ein Pulvervorrat kann in Form eines Zylinders ausgestaltet sein. Pulvervorräte und Substratplattform (oder ein Behälter, welches die Substratplattform umfasst) können unmittelbar nebeneinander angeordnet sein.

In einer Ausführungsform kann die erfindungsgemäße Anlage dazu ausgestaltet sein, ein selektives Laserschmelzen oder/und ein Elektronenstrahlschmelzen auszuführen. Besonders bei diesen Verfahren wird Pulver mit verschiedenen Korngrößen und Formen verwendet. Dazu gehören auch Pulver mit kleinen Korngrößen und/oder spratziger Form. Eine glatte Oberfläche ist besonders vom Vorteil für die Qualität des hergestellten Bauteils (mehrdimensionale Struktur).

Die Aufgabe wird außerdem gelöst durch eine Auftragseinheit für eine erfindungsgemäße Anlage zum additiven Herstellen von mehrdimensionalen Strukturen, wobei die Auftragseinheit dazu vorgesehen ist, mittels einer räumlichen Bewegung eine oder mehrere Pulverschichten in einer Auftragungsebene auf eine Substratplattform oder auf einer bereits mit der Anlage behandelten Pulverschicht aufzutragen. Die Auftragseinheit umfasst des Weiteren eine Anregungseinheit, die dazu vorgesehen ist, beim Auftragen des Pulvers Anhaftungen einzelner Pulverkörner zueinander und/oder zu einer bereits mit der Anlage behandelten Pulverschicht aufzubrechen, sodass die Auftragseinheit eine glatte Pulverschicht auf die Substratplattform und/oder auf die vorherige Pulverschicht auftragen kann. Die Anordnung der Anregungseinheit in der Auftragseinheit, erlaubt eine besonders genaue und lokale Anregung der Pulverkörner bei einem Glätten (mindestens bei der Auftragung). Natürlich kann auch ein zweites Glätten ohne Pulverauftrag stattfinden. Die Anordnung bewirkt, besonders unterstützt durch eine geeignete Wahl von Parametern wie z.B. der Frequenz der Anregungseinheit, einen effizienten und glatten Pulverauftrag.

Hiermit wird durch die erfindungsgemäße Auftragseinheit ein glattes Pulverauftragen in einer additiven Herstellung ermöglicht, welches zumindest die physikalischen Eigenschaften des Pulvers, wie z. B. Größe und Form berücksichtigt.

In einer Ausführungsform, kann die Anregungseinheit eine Vibrationseinheit umfassen, die mittels Schwingungen die Anhaftungen aufbricht. Dabei können die Schwingungen pneumatisch und/oder elektromagnetisch und/oder durch Ultraschall erzeugt werden. Die Schwingungen in ihrer Frequenz sollen dabei nicht mit einer Resonanzfrequenz der Anlage überlappen, um die Anlage nicht zu schädigen. Außerdem kann die Frequenz der Schwingung eine Wellenlänge besitzen, die mit einer Korngröße des Pulvers korreliert und/oder einer Auftragsgeschwindigkeit der Auftragseinheit entlang einer Auftragsrichtung korreliert. Die Amplitude der Schwingungen korreliert mit der Frequenz und somit auch der Auftragsgeschwindigkeit, sodass die Größe der einzelnen Körner mit der schwingenden Amplitude in der Größenordnung übereinstimmt. Dies hat den Vorteil, dass die Geschwindigkeit beim Auftragen ohne Verlust an Qualität, gesteigert werden kann. Daher kann durch diese Ausführungsform die Effizienz bei der Herstellung erhöht werden. Bevorzugt kann die Frequenz der Anregung zwischen 40 Hz bis 100 kHz betragen.

In einer Ausführungsform umfasst die erfindungsgemäße Auftragseinheit ein Glättewerkzeug, wobei vorzugsweise das Glättewerkzeug eine Schleifeinheit, eine Silikon-Lippe, ein Kunststoffbalken, eine Bürste und/oder eine Metallkante umfasst. Besonders bevorzugt weist die Schleifeinheit ein Material mit einem gewissen Härtegrad auf, welches für Ultraschallschleifen und/oder Polieren geeignet ist, wobei bevorzugter Weise die Schleifeinheit ein herkömmlicher Schleifstein ist, der besonders bevorzugt aus Keramik sein kann. Die Eigenschaft der besonderen Härte beim Schleifeinheit ermöglicht besonders eine Anwendung in hohen Frequenzbereichen, wie z.B. bei Ultraschall, da sie besonders stabil ist. Die Schleifeinheit kann weiterhin aus Aluminiumoxid oder Diamant sein.

In einer weiteren Ausführungsform kann die Auftragseinheit ein Glättewerkzeughalter umfassen, der dazu ausgestaltet ist, das Glättewerkzeug zu halten. Der Glättewerkzeughalter kann so ausgestaltet sein, dass das Glättewerkzeug, z.B. ein Schleifstein, ortsfest auf der Auftragsvorrichtung befestigt sein kann. Dabei kann der Glättewerkzeughalter so ausgestaltet sein, dass man das Glättewerkzeug hineinschiebt. Der Glättewerkzeughalter kann je nach Material auch zur Dämpfung der Anregung beitragen, wenn z.B. die Anregungseinheit oberhalb des Glättewerkzeughalters angeordnet ist. Dabei ist von Vorteil, wenn der Glättewerkzeughalter aus einem weichen Material ausgestaltet ist, der Schwingungen gut absorbiert. In einer vorteilhaften Ausführungsform kann der Glättewerkzeughalter in die Anregungseinheit integriert sein. Dies kann eine kompaktere Bauweise ermöglichen und alternativ kann die Anordnung zu der Dämpfung beitragen.

In einer Ausführungsform kann die erfindungsgemäße Auftragseinheit eine Dämpfungseinheit umfassen, die dazu ausgestaltet ist, eine Übertragung der Anregung auf Anlagenkomponenten der Anlage außerhalb der Anregungseinheit zu reduzieren. In einer weiteren Ausführungsform kann die erfindungsgemäße Auftragseinheit ein Halter umfassen, der dazu vorgesehen ist, die Auftragseinheit an Führungen zur Ausführung einer definierten Bewegung der Auftragseinheit zu halten, wobei bevorzugter Weise der Halter als Dämpfungseinheit oder als Teil davon ausgeführt ist. Die Dämpfungseinheit kann dabei dazu ausgestaltet sein, den Halter mit der Anregungseinheit zu verbinden. Der Halter kann aus einem weichem Material hergestellt sein, der besonders dazu geeignet ist, Schwingungen zu absorbieren. Das kann eine Polymerverbindung sein und/oder eine Kombination aus Gummi und Metall. Der Halter kann daher zusätzlich zum Stabilisieren und Halten der Auftragseinheit auch die Funktion besitzen, zur Dämpfung beizutragen. Dies kann eine kompaktere Bauweise ermöglichen. Auch kann die Anordnung zu der Dämpfung der Schwingungen beitragen.

Alle Merkmale der erfindungsgemäßen Auftragseinheit, die mit den Merkmalen der erfindungsgemäßen Anlage korrelieren, weisen auch mindestens die entsprechenden Vorteile auf.

Die Aufgabe wird weiterhin gelöst durch ein Verfahren zum additiven Herstellen von mehrdimensionalen Strukturen durch eine erfindungsgemäße Anlage, umfassend eine räumlich bewegliche Auftragseinheit für Pulver und eine Anregungseinheit, umfassend die Schritte: Auftragen einer oder mehrere Pulverschichten in einer Auftragungsebene auf eine Substratplattform oder auf einer bereits mit der Anlage behandelten Pulverschicht durch die Auftragseinheit; Anregen und Aufbrechen von Anhaftungen einzelner Pulverkörner zueinander und/oder zu einer bereits mit der Anlage behandelten Pulverschicht durch die Anregungseinheit bei mindestens einem Auftragen, vorzugsweise bei jedem Auftragen; und Glätten der Pulverschicht durch die Auftragseinheit.

Hiermit wird durch das erfindungsgemäße Verfahren ein glattes Pulverauftragen in einer additiven Herstellung bereitgestellt, welches zumindest die physikalischen Eigenschaften des Pulvers, wie z. B. Größe und Form berücksichtigt.

Alle Merkmale des erfindungsgemäßen Verfahrens, die mit den Merkmalen der erfindungsgemäßen Anlage und der erfindungsgemäßen Auftragseinheit korrelieren, weisen auch mindestens die entsprechenden Vorteile auf.

In einer weiteren Ausführungsform weist ein erfindungsgemäßes Verfahren mindestens einen weiteren Schritt eines mindestens zweiten Glättens durch die Auftragseinheit, die nach erfolgtem Auftragen der Pulverschicht ohne weiteres Auftragen von Pulver erneut über die aufgetragene Pulverschicht bewegt wird. Dies hat den Vorteil, dass eine Schicht auch ohne ein weiteres Pulverauftragen nochmal geglättet werden kann.

Erfindungsgemäß wäre es vorteilhaft, wenn ein Verfahren ferner einen weiteren Schritt des Bereitstellens von Pulver aus mindestens einem ersten Pulvervorrat eines Pulversystems zur Auftragen einer Pulverschicht durch die Auftragungseinheit umfasst. In einer weiteren Ausführungsform umfasst ein erfindungsgemäße Verfahren einen weiteren Schritt eines Beförderns eine Menge an Pulver in die Auftragungsebene mittels einer fahrbaren Pulverfördereinheit des ersten Pulvervorrats, damit diese Menge an Pulver nachfolgend von der Auftragseinheit als die Pulverschicht auf die Substratplattform oder auf einer bereits mit der Anlage behandelten Pulverschicht aufträgt. Auch kann ein erfindungsgemäßes Verfahren einen weiteren Schritt eines Schiebens von überschüssigem Pulver beim Auftragen des Pulvers über die Substratplattform hinaus in einen Überlaufbehälter, vorzugsweise ist der Überlaufbehälter ein zweiter Pulvervorrat, umfassen. Bevorzugt kann ein erfindungsgemäßes Verfahren einen weiteren Schritt eines alternierenden Auftragens der Menge an Pulver durch die Auftragseinheit von dem ersten Pulvervorrat oder dem zweiten Pulvervorrat, der analog zum ersten Pulvervorrat ausgestaltet ist, wobei auch der erste Pulvervorrat als Überlaufbehälter verwendet wird, umfassen.

Die voranstehenden Ausführungsformen können in einer beliebigen Reihenfolge auch abweichend von den Anspruchsrückbezügen kumulativ oder einzeln miteinander kombiniert werden.

### Kurze Beschreibung der Figuren

- **Fig. 1**: **a)** Erfindungsgemäße Anlage beim Auftragen von Pulver mittels einer Auftragseinheit; **b)** Seitliche Ansicht der Ausführungsform von a);
- **Fig. 2**: **a)** Erfindungsgemäße Auftragseinheit mit Anregungseinheit; **b)** Querschnitt der Auftragseinheit;
- **Fig. 3**: **a)** Eine Ausführungsform eines erfindungsgemäßen Pulversystems; und **b)** Eine Ausfuhrungsform des erfindungsgemäßen Pulversystems mit einem zweiten Pulvervorrat;
- **Fig. 4**: Eine Ausführungsform erfindungsgemäßen Verfahrens;
- **Fig. 5**: Eine weitere Ausführungsform des erfindungsgemäßen Verfahrens;
- **Fig. 6**: **a)** Erfindungsgemäße Anlage Frontansicht; **b)** Ausführungsform Pulversystem;
- **Fig. 7**: **a)** Konventionell aufgetragene Pulverschicht; **b)** Durch eine erfindungsgemäße Anlage, bzw. Auftragseinheit geglättete Pulverschicht.

### Detaillierte Beschreibung der Figuren

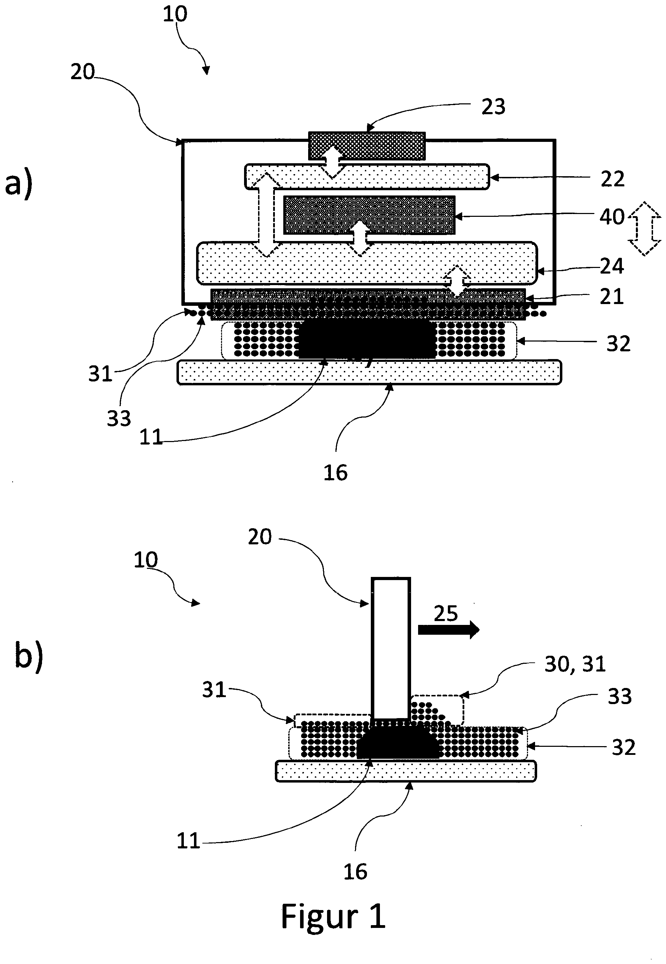

Figur 1 a) zeigt eine erfindungsgemäße Anlage 10 beim Auftragen von Pulver 30 mittels einer Auftragseinheit 20. Die Anlage 10, geeignet zum additiven Herstellen von mehrdimensionalen Strukturen 11, umfasst hierbei eine räumlich bewegliche Auftragseinheit 20 für Pulver 30. Außerdem umfasst sie eine Anregungseinheit 40. Die Auftragseinheit 20 ist dazu vorgesehen eine oder mehrere Pulverschichten 31 in einer Auftragungsebene 15 auf eine Substratplattform 16 oder auf einer bereits mit der Anlage behandelten Pulverschicht 32 aufzutragen. Die Anregungseinheit 40 ist dazu vorgesehen, beim Auftragen des Pulvers 30 Anhaftungen einzelner Pulverkörner 33 zueinander und/oder zu einer bereits mit der Anlage behandelten Pulverschicht 32 aufzubrechen, sodass die Auftragseinheit 20 eine glatte Pulverschicht 31, 32 auf die Substratplattform 16 und/oder auf die vorherige Pulverschicht 32 auftragen kann. Dabei ist in dieser Ausführungsform die Auftragseinheit wie folgt ausgestaltet (von oben nach unten): Die Auftragseinheit 20 der Anlage 10 verfügt über einen Halter 23, an Führungen zur Ausführung einer definierten Bewegung der Auftragseinheit 20 gehalten ist. Der Halter 23 kann als Dämpfungseinheit 22 oder als Teil davon ausgeführt sein, da die Anregungseinheit in der Auftragseinheit in dieser Ausführungsform angeordnet ist. Ferner umfasst die Ausführungsform eine Dämpfungseinheit 22, die dazu ausgestaltet ist, eine Übertragung der Anregung auf Anlagenkomponenten außerhalb der Anregungseinheit 40 zu reduzieren. Die Dämpfungseinheit 22 kann hier zusätzlich die Funktion erfüllen den Halter 23 und den Glättewerkzeughalter 24 zu verbinden, welches durch die gestrichelten Pfeile gezeigt werden. Die Auftragseinheit 10 umfasst eine Anregungseinheit 20, wobei die Anregungseinheit 40 räumlich beweglich relativ zu der Pulverschicht 32 und/oder zu der Substratplattform 16 angeordnet ist. Die Anregungseinheit 40 kann eine Vibrationseinheit umfassen, die mittels Schwingungen die Anhaftungen der Pulverkörner 33 zueinander aufbricht. Die Anregungseinheit 40 kann oberhalb des Glättewerkzeughalters angebracht werden und ist mit dem verbunden (gestrichelter Pfeil). Die gezeigte Ausführungsform umfasst ein Glättewerkzeug 21, welches eine Schleifeinheit, eine Silikon-Lippe, ein Kunststoffbalken, eine Bürste und/oder eine Metallkante umfassen kann. Das Material der Schleifeinheit sollte ein gewisser Härtegrad aufweisen, welches für Ultraschallschleifen und/oder Polieren geeignet ist, wobei bevorzugter Weise die Schleifeinheit ein herkömmlicher Schleifstein ist. Die Schleifeinheit kann z.B. aus Keramik sein. Die Auftragseinheit 20 trägt eine oder mehrere Pulverschichten 31 auf die Substratplattform 16 (wenn es um die erste Schicht handelt) und ansonsten auf bereits von der Anlage behandelte

Pulverschichten 32 auf. Eine bereits von der Anlage 10 behandelte Pulverschicht 32 umfasst daher die bisher bereits gelaserte (geformte) mehrdimensionale Struktur 11.

Figur 1 b) zeigt eine seitliche Ansicht der Ausführungsform aus Figur 1 a), wobei die Auftragseinheit 20 der Anlage 10 in eine Auftragsrichtung 25 beim Auftragen bewegt wird. Die Auftragseinheit fährt mit einer Auftragsgeschwindigkeit über die bereits von der Anlage behandelte Pulverschicht 32 oder der Substratplattform 16. Es werden dabei pneumatische und/oder elektromagnetische und/oder Ultraschall Schwingungen bei der Auftragung erzeugt, die die Anhaftungen der einzelnen Pulverkörner 33 zueinander aufbrechen. Die Frequenz der Schwingungen sollte jedoch nicht mit der Resonanzfrequenz der Anlage überlappen, um die Anlage nicht zu beschädigen. Das Aufbrechen findet sowohl bei dem auftragenden Pulver 30, 31 und den bereits von der Anlage 10 behandelte Pulverschicht 32 statt und zwischen diesen. Die Frequenz der Schwingung kann eine Wellenlänge besitzen, die mit einer Korngröße des Pulvers korreliert und/oder der Auftragsgeschwindigkeit der Auftragseinheit 20 entlang einer Auftragsrichtung 25 korreliert. Vorzugsweise ist diese Frequenz im Bereich von 40 Hz bis 100 kHz. Die Korngröße eines einzelnen Pulverkorns 33 ist hier meistens kleiner als 20 µm. Ein besonderes Merkmal an der erfindungsgemäßen Anlage gegenüber dem Stand der Technik ist jedoch, dass sie auch eine glatte Schicht bereitstellen kann, wenn ein Teil des verwendeten Pulvers 30 eine Korngröße von kleiner 2 µm aufweist.

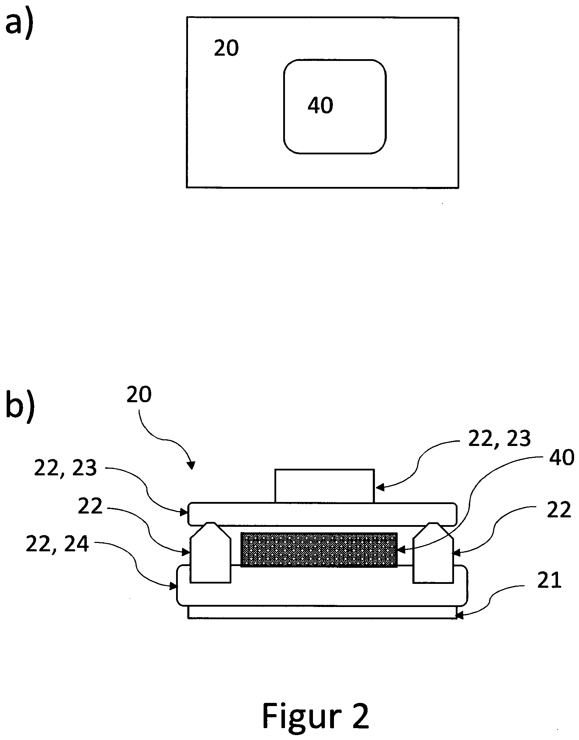

Figur 2 a) zeigt eine erfindungsgemäße Auftragseinheit 20 für eine erfindungsgemäße Anlage 10 zum additiven Herstellen von mehrdimensionalen Strukturen 11, wobei die Auftragseinheit 20 dazu vorgesehen ist, mittels einer räumlichen Bewegung eine oder mehrere Pulverschichten in einer Auftragungsebene 15 auf eine Substratplattform 16 oder auf einer bereits mit der Anlage 10 behandelten Pulverschicht 32 aufzutragen. Die Auftragseinheit 20 umfasst des Weiteren eine Anregungseinheit 40, die dazu vorgesehen ist, beim Auftragen des Pulvers Anhaftungen einzelner Pulverkörner 33 zueinander und/oder zu einer bereits mit der Anlage behandelten Pulverschicht 32 aufzubrechen, sodass die Auftragseinheit 20 eine glatte Pulverschicht auf die Substratplattform 16 und/oder auf die vorherige Pulverschicht auftragen kann.

Eine Ausführungsform der Auftragseinheit 20 ist im Querschnitt in **Figur 2 b)** veranschaulicht. Die Anregungseinheit 40 der Auftragseinheit 20 kann eine Vibrationseinheit umfassen, die mittels Schwingungen die Anhaftungen aufbricht. Die Vibrationseinheit kann analog zur Vibrationseinheit aus Figur 1 a) und b) ausgestaltet sein. Ebenfalls analog zu den Ausführungsformen in Figur 1 a) und b) kann ein Glättewerkzeug 21 und ein Glättewerkzeughalter 24 der Auftragseinheit ausgestaltet sein. Die Anregungseinheit 40 kann oberhalb des Glättewerkzeughalters 24 angeordnet sein. Die Auftragseinheit umfasst zudem eine Dämpfungseinheit 22, die dazu ausgestaltet ist, eine Übertragung der Anregung auf Anlagenkomponenten der Anlage 10 außerhalb der Anregungseinheit 40 zu reduzieren. Diese können auf mindestens zwei Seiten der Anregungseinheit 40 angeordnet sein um die Schwingungen zu dämpfen und um den Glättewerkzeughalter mit einem weiteren Halter 23, bzw. Dämpfer 22 zu verbinden. Der Halter 23 ist dazu vorgesehen, die Auftragseinheit 20 an Führungen zur Ausführung einer definierten Bewegung der Auftragseinheit 20 zu halten, wobei bevorzugter Weise der Halter 23 als Dämpfungseinheit 22 oder als Teil davon ausgeführt ist. Die Dämpfereinheit ist ferner dazu ausgestaltet den Halter 23 mit der Anregungseinheit 40 zu verbinden.

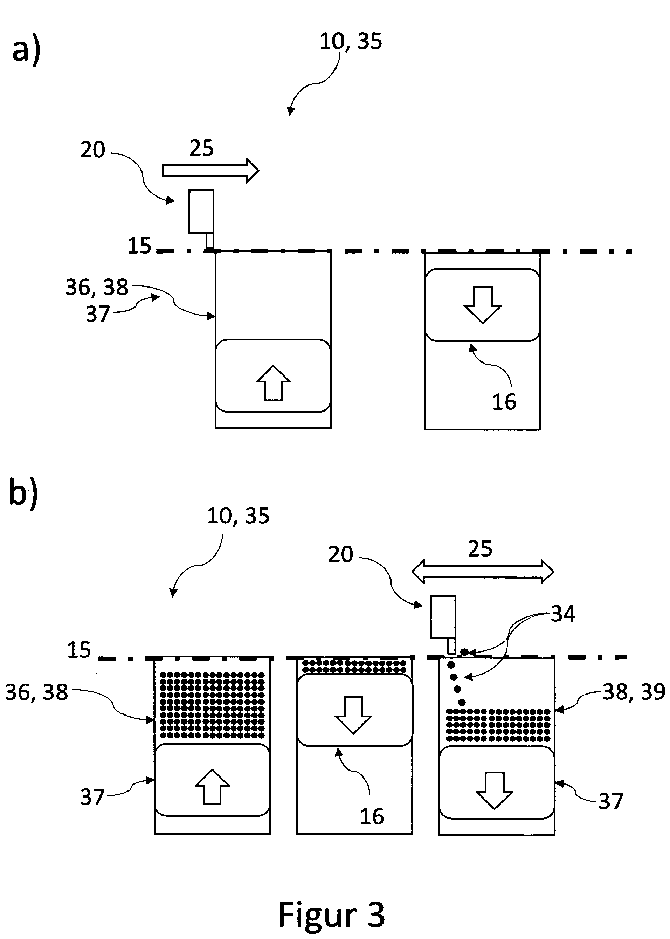

Figur 3 a) zeigt eine erfindungsgemäße Anlage 10, die ein Pulversystem 35 umfasst, welches Pulver 30 aus mindestens einem ersten Pulvervorrat zur Auftragen einer Pulverschicht durch die Auftragungseinheit 20 bereitstellt. Dabei weist mindestens der erste Pulvervorrat 36 eine fahrbare Pulverfördereinheit 37 auf, die eine Menge an Pulver in die Auftragungsebene 15 (z.B. Belichtungseben) befördert, damit dieses nachfolgend von der Auftragseinheit 20 in einer oder mehreren Pulverschichten auf die Substratplattform 16 oder auf einer bereits mit der Anlage behandelten Pulverschicht 32 auftragen kann. Überschüssiges Pulver 34 wird nach dem Auftragen über die Substratplattform 16 hinaus in einem Überlaufbehälter 38 (nicht dargestellt) geschoben und entsorgt.

Figur 3 b) zeigt eine Ausführungsform des Pulversystems 35, wobei ein zweiter Pulvervorrat 39, der analog zum ersten Pulvervorrat 36 ausgestaltet ist, einen Überlaufbehälter darstellt. Die Auftragseinheit 20 ist dazu vorgesehen, mit jeweils geeigneten Auftragsrichtungen 25 die Menge an Pulver 30 alternierend vom ersten bzw. zweiten Pulvervorrat 39 aufzutragen, wobei auch der erste Pulvervorrat als Überlaufbehälter 38 verwendet wird. Die Menge an befördertem Pulver oberhalb der Auftragungsebene des Pulvervorrats 36, 39 entspricht im optimalen Fall eine Schichtdicke von einem Faktor 2, bevorzugt Faktor 3 oder 4, einer Schichtdicke einer aufgetragenen und/oder aufzutragenden Pulverschicht auf der Substratplattform 16. Diese Ausführungsform ermöglicht eine besonders effiziente Pulvernutzung, da das überschüssige Pulver weiterhin verwendet werden kann, anstatt es zu entsorgen.

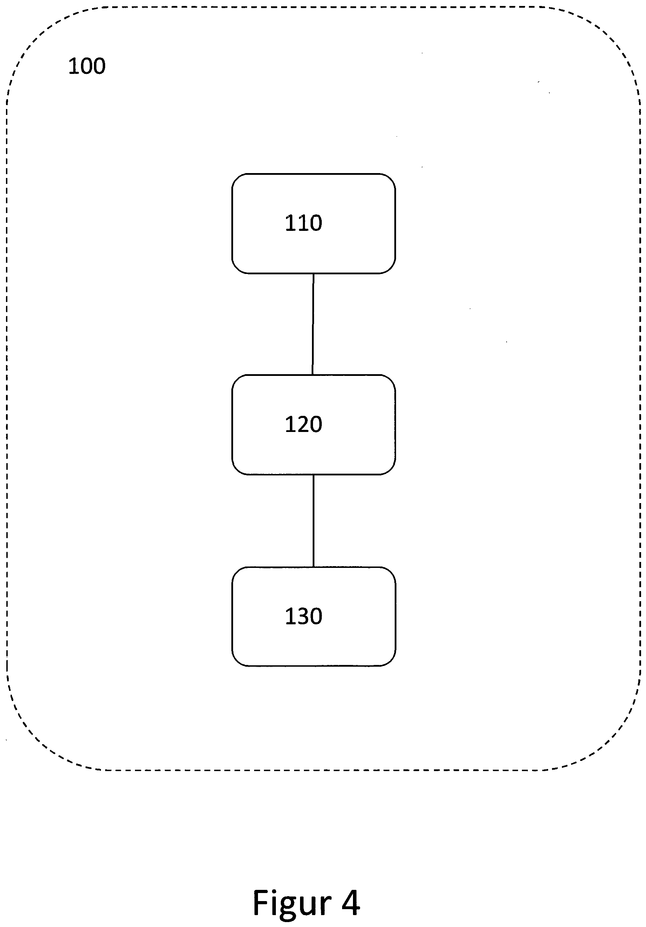

Figur 4 zeigt ein erfindungsgemäßes Verfahren 100 zum additiven Herstellen von mehrdimensionalen Strukturen 11 durch eine erfindungsgemäße Anlage 10, umfassend eine räumlich bewegliche Auftragseinheit 20 für Pulver 30 und eine Anregungseinheit 40 Das Verfahren umfasst ein Auftragen 110 einer oder mehrere Pulverschichten in einer Auftragungsebene 15 auf eine Substratplattform oder auf einer bereits mit der Anlage 10 behandelten Pulverschicht durch die Auftragseinheit 20; ein Anregen und Aufbrechen 120 von Anhaftungen einzelner Pulverkörner zueinander und/oder zu einer bereits mit der Anlage behandelten Pulverschicht 32 durch die Anregungseinheit 40 bei mindestens einem Auftragen, vorzugsweise bei jedem Auftragen; und ein Glätten 130 der Pulverschicht 31, 32 durch die Auftragseinheit 20.

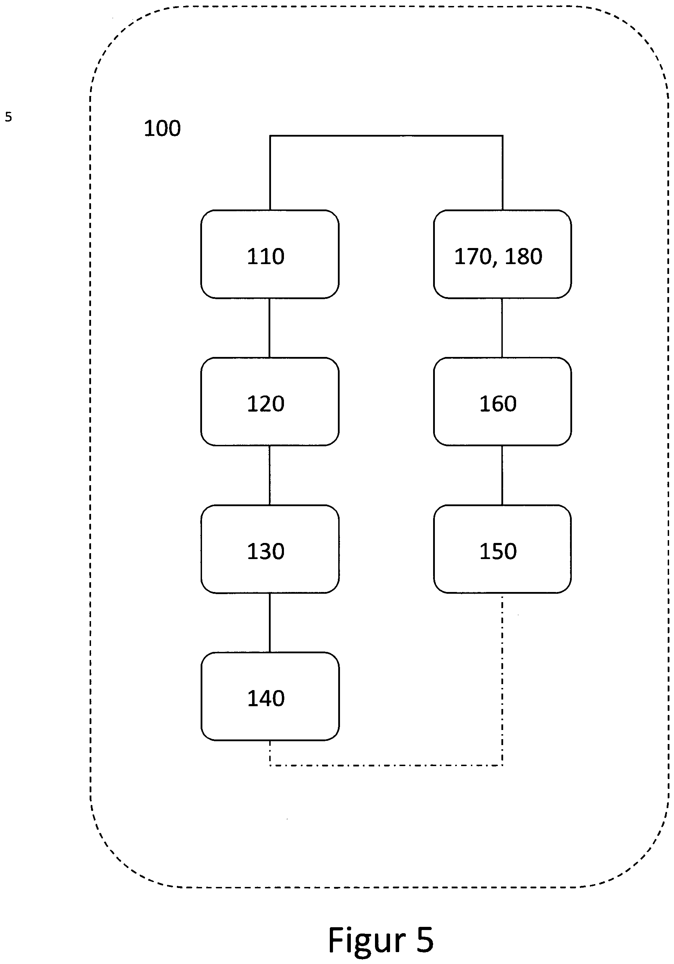

Das erfindungsgemäße Verfahren 100 aus Figur 5 a) kann mit weiteren Schritten, die in Figur 4 b) gezeigt sind, kombiniert werden um eine glatte Oberfläche zu erhalten. Ein weiterer Schritt besteht aus mindestens ein zweites Glätten 140 durch die Auftragseinheit 20, die nach erfolgtem Auftragen der Pulverschicht ohne weiteres Auftragen von Pulver erneut über die aufgetragene Pulverschicht bewegt wird. Weiterhin umfasst die Ausführungsform ein Bereitstellen 150 von Pulver aus mindestens einem ersten Pulvervorrat 36 eines Pulversystems 35 zur Auftragen einer Pulverschicht durch die Auftragungseinheit 20. Ein weiterer Schritt umfasst ein Befördern 160 einer Menge an Pulver in die Auftragungsebene 15 mittels einer fahrbaren Pulverfördereinheit 37 des ersten Pulvervorrats 36, damit diese Menge an Pulver nachfolgend von der Auftragseinheit 20 als die Pulverschicht auf die Substratplattform 16 oder auf einer bereits mit der Anlage behandelten Pulverschicht 32 aufträgt. Des Weiteren umfasst das Verfahren ein Schieben 170 von überschüssigem Pulver 34 beim Auftragen des Pulvers über die Substratplattform 16 hinaus in einen Überlaufbehälter 38. Dabei ist vorzugsweise der Überlaufbehälter 38 ein zweiter Pulvervorrat 39. Ein weiterer Schritt umfasst ein alternierendes Auftragen 180 der Menge an Pulver durch die Auftragseinheit 20 von dem ersten Pulvervorrat 36 oder dem zweiten Pulvervorrat 39, der analog zum ersten Pulvervorrat 36 ausgestaltet ist, wobei auch der erste Pulvervorrat 36 als Überlaufbehälter 38 verwendet wird.

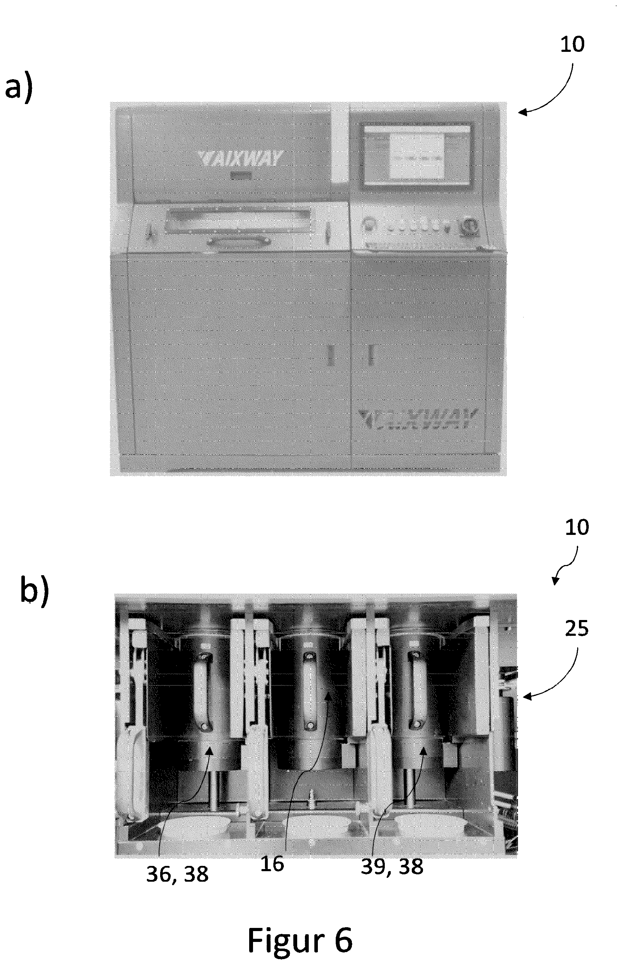

Figur 6 a) zeigt eine Ausführung einer erfindungsgemäße Anlage 10 in einer Frontalansicht. Figur 6 b) zeigt ein erfindungsgemäßes Pulversystem 25 mit einem ersten Pulvervorrat 36 und einem zweiten Pulvervorrat 39, die beide als Überlaufbehälter 38 fungieren und ein Behälter umfassend der Substratplattform 16 (nicht gezeigt), welches in der erfindungsgemäßen Anlage 10 für die Verbesserung der Pulvernutzungseffizienz integriert ist.

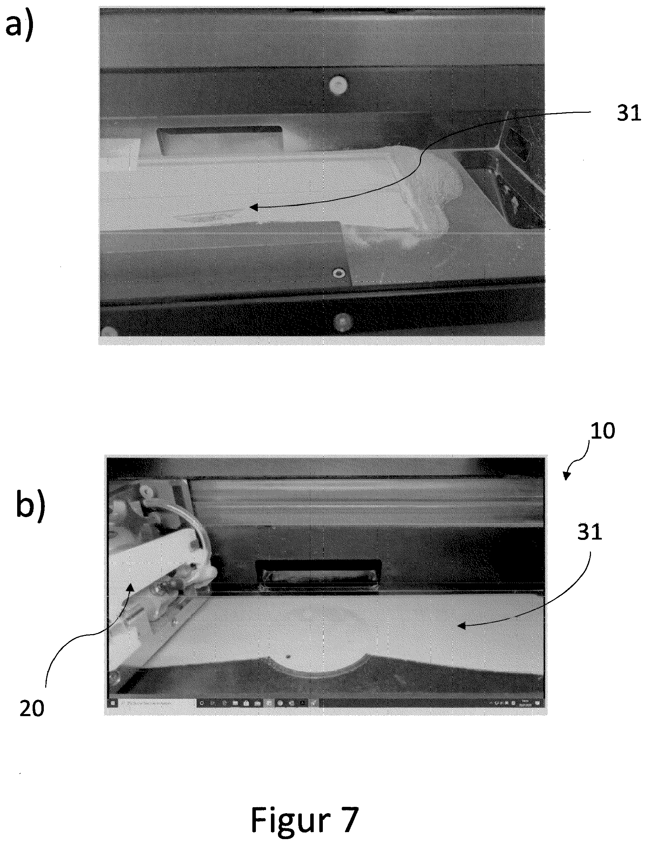

Figur 7 a) zeigt eine Pulverschicht (oder auch das "Pulverbett" genannt) 31, die ohne Glätten aufgetragen wurde. Figur 7 b) zeigt eine Pulverschicht 31, die durch eine erfindungsgemäße Auftragseinheit 20 in einer erfindungsgemäßen Anlage 10 geglättet wurde.

Die voranstehenden Ausführungsformen können in einer beliebigen Reihenfolge auch abweichend von den Anspruchsrückbezügen kumulativ oder einzeln miteinander kombiniert werden.

### Bezugszeichen

- 10: erfindungsgemäße Anlage
- 11: mehrdimensionale Struktur
- 15: Auftragsebene
- 16: Substratplattform
- 20: Auftragseinheit
- 21: Glättewerkzeug
- 22: Dämpfungseinheit
- 23: Halter
- 24: Glättewerkzeughalter
- 25: Auftragsrichtung
- 30: Pulver
- 31: Pulverschicht
- 32: bereits von der Anlage behandelte Pulverschicht (aka. vorherige Pulverschicht)
- 33: einzelnes Pulverkorn
- 34: überschüssiges Pulver
- 35: Pulversystem
- 36: erster Pulvervorrat
- 37: fahrbare Pulverfördereinheit
- 38: Überlaufbehälter
- 39: zweiter Pulvervorrat
- 40: Anregungseinheit
- 100: erfindungsgemäßes Verfahren
- 110... 180: Schritte nach einem erfindungsgemäßen Verfahren

## Patentansprüche

1. Eine Anlage (10) zum additiven Herstellen von mehrdimensionalen Strukturen (11) umfassend eine räumlich bewegliche Auftragseinheit (20) für Pulver (30) und eine Anregungseinheit (40), wobei die Auftragseinheit (20) dazu vorgesehen ist, eine oder mehrere Pulverschichten (31) in einer Auftragungsebene (15) auf eine Substratplattform (16) oder auf einer bereits mit der Anlage behandelten Pulverschicht (32) aufzutragen, wobei die Anregungseinheit (40) dazu vorgesehen ist, beim Auftragen des Pulvers (30) Anhaftungen einzelner Pulverkörner (33) zueinander und/oder zu einer bereits mit der Anlage behandelten Pulverschicht (32) aufzubrechen, sodass die Auftragseinheit (20) eine glatte Pulverschicht (31, 32) auf die Substratplattform und/oder auf die vorherige Pulverschicht (32) auftragen kann.

2. Die Anlage (10) nach Anspruch 1, wobei die Anregungseinheit (40) eine Vibrationseinheit umfasst, die mittels Schwingungen die Anhaftungen aufbricht, wobei vorzugsweise die Schwingungen pneumatisch und/oder elektromagnetisch und/oder durch Ultraschall erzeugt werden, und/oder die Schwingungen in ihrer Frequenz nicht mit einer Resonanzfrequenz der Anlage überlappen, und/oder die Frequenz der Schwingung eine Wellenlänge besitzt, die mit einer Korngröße des Pulvers korreliert und/oder einer Auftragsgeschwindigkeit der Auftragseinheit entlang einer Auftragsrichtung (25) korreliert und/oder die Frequenz der Anregung zwischen 40 Hz bis 100 kHz beträgt.

3. Die Anlage (10) nach einem der vorangehenden Ansprüche, wobei die Auftragseinheit (20) ein Glättewerkzeug (21) umfasst, wobei vorteilhafterweise das Glättewerkzeug (21) eine Schleifeinheit, eine Silikon-Lippe, ein Kunststoffbalken, eine Bürste und/oder eine Metallkante umfasst, wobei besonders vorteilhafterweise die Schleifeinheit ein Material mit einem gewissen Härtegrad aufweist, welches für Ultraschallschleifen und/oder Polieren geeignet ist, wobei bevorzugter Weise die Schleifeinheit ein herkömmlicher Schleifstein ist, wobei besonders bevorzugt die Schleifeinheit aus Keramik ist.

4. Die Anlage (10) nach einem der vorangehenden Ansprüche, wobei die Anregungseinheit (40) ortsfest relativ zu der Pulverschicht (32) und/oder zu der Substratplattform (16) angeordnet ist.

5. Die Anlage (10) nach einem der Ansprüche 1 - 3, wobei die Anregungseinheit räumlich beweglich relativ zu der Pulverschicht (32) und/oder zu der Substratplattform (16) angeordnet ist, wobei vorteilhafterweise die Auftragseinheit die Anregungseinheit umfasst.

6. Die Anlage (10) nach einem der vorangehenden Ansprüche, umfassend eine Dämpfungseinheit (22), die dazu ausgestaltet ist, eine Übertragung der Anregung auf Anlagenkomponenten außerhalb der Anregungseinheit (40) zu reduzieren und/oder die Auftragseinheit (20) über einen Halter (23) an Führungen zur Ausführung einer definierten Bewegung der Auftragseinheit (20) gehalten ist, wobei der Halter (23) im Falle der Anregungseinheit (40) angeordnet in der Auftragseinheit (20) als Dämpfungseinheit (22) oder als Teil davon ausgeführt ist.

7. Die Anlage (10) nach einem der vorangehenden Ansprüche, wobei mindestens ein Teil des verwendeten Pulvers (30) eine Eigenschaft zur Agglomeration und/oder eine spratzige Struktur aufweist, wobei vorteilhafterweise das Pulver eine Korngröße von < 20 µm aufweist, vorzugsweise mindestens ein Teil des verwendeten Pulvers (30) eine Korngröße von < 2 µm aufweist.

8. Die Anlage (10) nach einem der vorangehenden Ansprüche, umfassend ein Pulversystem (35), welches Pulver (30) aus mindestens einem ersten Pulvervorrat zur Auftragen einer Pulverschicht durch die Auftragungseinheit (20) bereitstellt, wobei vorteilhafterweise mindestens der erste Pulvervorrat (36) eine fahrbare Pulverfördereinheit (37) aufweist, die eine Menge an Pulver in die Auftragungsebene (15) befördert, damit dieses nachfolgend von der Auftragseinheit (20) in einer oder mehreren Pulverschichten auf die Substratplattform (16) oder auf einer bereits mit der Anlage behandelten Pulverschicht (32) aufträgt, und/oder die Auftragseinheit dazu vorgesehen ist, beim Auftragen des Pulvers (30) überschüssiges Pulver (34) über die Substratplattform (16) hinaus in einem Überlaufbehälter (38) zu schieben, wobei bevorzugterweise der Überlaufbehälter (38) einen zweiten Pulvervorrat (39) ausgestaltet analog zum ersten Pulvervorrat (36) darstellt, wobei die Auftragseinheit (20) dazu vorgesehen ist, mit jeweils geeigneten Auftragsrichtungen (25) die Menge an Pulver (30) alternierend vom ersten bzw. zweiten Pulvervorrat (39) aufzutragen, wobei auch der erste Pulvervorrat als Überlaufbehälter (38) verwendet wird und/oder die Menge an befördertem Pulver oberhalb der Auftragungsebene des Pulvervorrats (36, 39) eine Schichtdicke von einem Faktor größer gleich 1.2, besonders einem Faktor 2, besonders bevorzugt einem Faktor 3 oder 4, einer Schichtdicke einer aufgetragenen und/oder aufzutragenden Pulverschicht auf der Substratplattform (16) entspricht.

9. Die Anlage (10) nach einem der voranstehenden Ansprüche, die dazu ausgestaltet ist, ein selektives Laserschmelzen oder/und ein Elektronenstrahlschmelzen auszuführen.

10. Eine Auftragseinheit (20) für eine Anlage (10) zum additiven Herstellen von mehrdimensionalen Strukturen (11) gemäß einem der vorangehenden Ansprüche, wobei die Auftragseinheit (20) dazu vorgesehen ist, mittels einer räumlichen Bewegung eine oder mehrere Pulverschichten in einer Auftragungsebene (15) auf eine Substratplattform (16) oder auf einer bereits mit der Anlage (10) behandelten Pulverschicht (32) aufzutragen, umfassend des Weiteren eine Anregungseinheit (40), die dazu vorgesehen ist, beim Auftragen des Pulvers Anhaftungen einzelner Pulverkörner (33) zueinander und/oder zu einer bereits mit der Anlage behandelten Pulverschicht (32) aufzubrechen, sodass die Auftragseinheit (20) eine glatte Pulverschicht auf die Substratplattform (16) und/oder auf die vorherige Pulverschicht auftragen kann.

11. Die Auftragseinheit (20) nach Anspruch 10, wobei die Anregungseinheit (40) eine Vibrationseinheit umfasst, die mittels Schwingungen die Anhaftungen aufbricht, wobei vorteilhafterweise die Schwingungen pneumatisch und/oder elektromagnetisch und/oder durch Ultraschall erzeugt werden, wobei besonders vorteilhaft die Schwingungen in ihrer Frequenz nicht mit einer Resonanzfrequenz der Anlage überlappen und/oder die Frequenz der Schwingung eine Wellenlänge besitzt, die mit einer Korngröße des Pulvers korreliert und/oder einer Auftragsgeschwindigkeit der Auftragseinheit (20) entlang einer Auftragsrichtung korreliert und/oder die Frequenz der Anregung zwischen 40 Hz bis 100 kHz beträgt.

12. Die Auftragseinheit (20) nach einem der vorangehenden Ansprüche, wobei die Auftragseinheit ein Glättewerkzeug (21) umfasst, vorzugsweise umfasst das Glättewerkzeug eine Schleifeinheit, eine Silikon-Lippe, ein Kunststoffbalken, eine Bürste und/oder eine Metallkante, besonders bevorzugt weist die Schleifeinheit ein Material mit einem gewissen Härtegrad auf, welches für Ultraschallschleifen und/oder Polieren geeignet ist, wobei bevorzugter Weise die Schleifeinheit ein herkömmlicher Schleifstein ist, der besonders bevorzugt aus Keramik sein kann und/oder die Auftragseinheit ein Glättewerkzeughalter (24) umfasst, der dazu ausgestaltet ist, das Glättewerkzeug (21) zu halten, wobei bevorzugt die Anregungseinheit oberhalb des Glättewerkzeughalters (24) angeordnet ist oder der Glättewerkzeughalter (24) in die Anregungseinheit (40) integriert ist.

13. Die Auftragseinheit (20) nach einem der Ansprüche 10 - 12, umfassend eine Dämpfungseinheit (22), die dazu ausgestaltet ist, eine Übertragung der Anregung auf Anlagenkomponenten der Anlage (10) außerhalb der Anregungseinheit (40) zu reduzieren, wobei vorteilhafterweise die Auftragseinheit ein Halter (23) umfasst, der dazu vorgesehen ist, die Auftragseinheit (20) an Führungen zur Ausführung einer definierten Bewegung der Auftragseinheit (20) zu halten, wobei bevorzugter Weise der Halter (23) als Dämpfungseinheit (22) oder als Teil davon ausgeführt ist und/oder die Dämpfungseinheit (22) dazu ausgestaltet ist, den Halter (23) mit der Anregungseinheit (40) zu verbinden.

14. Verfahren (100) zum additiven Herstellen von mehrdimensionalen Strukturen (11) durch eine erfindungsgemäße Anlage (10), umfassend eine räumlich bewegliche Auftragseinheit (20) für Pulver (30) und eine Anregungseinheit (40), umfassend die Schritte:
- Auftragen (110) einer oder mehrere Pulverschichten in einer Auftragungsebene (15) auf eine Substratplattform oder auf einer bereits mit der Anlage (10) behandelten Pulverschicht durch die Auftragseinheit (20);
- Anregen und Aufbrechen (120) von Anhaftungen einzelner Pulverkörner zueinander und/oder zu einer bereits mit der Anlage behandelten Pulverschicht (32) durch die Anregungseinheit (40) bei mindestens einem Auftragen, vorzugsweise bei jedem Auftragen; und
- Glätten (130) der Pulverschicht (31, 32) durch die Auftragseinheit (20).

15. Verfahren nach Anspruch 14, umfassend einen weiteren Schritt eines mindestens zweiten Glättens (140) durch die Auftragseinheit (20), die nach erfolgtem Auftragen der Pulverschicht ohne weiteres Auftragen von Pulver erneut über die aufgetragene Pulverschicht bewegt wird und/oder umfassend einen weiteren Schritt des Bereitstellens (150) von Pulver aus mindestens einem ersten Pulvervorrat (36) eines Pulversystems (35) zur Auftragen einer Pulverschicht durch die Auftragungseinheit (20), vorteilhafterweise umfassend einen weiteren Schritt eines Beförderns (160) eine Menge an Pulver in die Auftragungsebene (15) mittels einer fahrbaren Pulverfördereinheit (37) des ersten Pulvervorrats (36), damit diese Menge an Pulver nachfolgend von der Auftragseinheit (20) als die Pulverschicht auf die Substratplattform (16) oder auf einer bereits mit der Anlage behandelten Pulverschicht (32) aufträgt und/oder umfassend einen weiteren Schritt eines Schiebens (170) von überschüssigem Pulver (34) beim Auftragen des Pulvers über die Substratplattform (16) hinaus in einen Überlaufbehälter (38), wobei vorzugsweise der Überlaufbehälter (38) ein zweiter Pulvervorrat (39) ist, besonders vorteilhaft umfassend einen weiteren Schritt eines alternierenden Auftragens (180) der Menge an Pulver durch die Auftragseinheit (20) von dem ersten Pulvervorrat (36) oder dem zweiten Pulvervorrat (39), der analog zum ersten Pulvervorrat (36) ausgestaltet ist, wobei auch der erste Pulvervorrat (36) als Überlaufbehälter (38) verwendet wird.
